# EUROPEAN PATENT APPLICATION

(11) **EP 4 576 793 A1**
(43) Date of publication of application: **25.06.2025**
(21) Application number: 24791787.5
(22) Date of filing: 14.03.2024
(51) Int. Cl.: H04N 21/466

(54) **INTERACTION METHOD AND APPARATUS, ELECTRONIC DEVICE AND STORAGE MEDIUM**

(30) Priority: 20.04.2023 CN 202310430402
(71) Applicant: Beijing Zitiao Network Technology Co., Ltd., Beijing 100190 (CN)
(72) Inventor: WANG, Hanqing, Beijing 100028 (CN); RAO, Qizheng, Beijing 100028 (CN); CHEN, Lijun, Beijing 100028 (CN); JIN, Xiaoshu, Beijing 100028 (CN); ZHANG, Wenshu, Beijing 100028 (CN); WANG, Shuo, Beijing 100028 (CN)
(74) Representative: Williams, Michael David
(86) International application number: PCT/CN2024/081783
(87) International publication number: WO 2024/217199

(57) **Abstract**

Embodiments of the present disclosure provide an interaction method and apparatus, an electronic device, and a storage medium. The method includes: displaying a preset control for target media content on a preset page; and displaying first prompt information in response to a preset trigger operation acting on the preset control, the preset trigger operation is different from a like operation acting on the preset control, the first prompt information is used to prompt that a number of recommendations of media content of a target type is to be increased, and the target type is a media content type of the target media content.

## Description

The present application claims priority to Chinese Patent Application No. 202310430402.4, filed with the China National Intellectual Property Administration on April 20, 2023 and entitled "INTERACTION METHOD AND APPARATUS, ELECTRONIC DEVICE, AND STORAGE MEDIUM", which is incorporated herein by reference in its entirety.

### FIELD

Embodiments of the present disclosure relate to the technical field of computer, and in particular, to an interaction method and apparatus, an electronic device, and a storage medium.

### BACKGROUND

Currently, media content may be recommended to a user for viewing. However, a way of determining the media content recommended to the user is undiversified and cannot meet the need of the user to adjust the media content recommended to the user.

### SUMMARY

Embodiments of the present disclosure provide an interaction method and apparatus, an electronic device, and a storage medium, so as to diversify a way of determining recommended media content and meet the need of a user to adjust the media content recommended to the user.

According to a first aspect, an embodiment of the present disclosure provides an interaction method. The method includes:
displaying a preset control for target media content on a preset page; and
displaying first prompt information in response to a preset trigger operation acting on the preset control, the preset trigger operation being different from a like operation acting on the preset control, the first prompt information being used to prompt that a number of recommendations of media content of a target type is to be increased, and the target type being a media content type of the target media content.

According to a second aspect, an embodiment of the present disclosure further provides an interaction apparatus. The apparatus includes:
a control display module configured to display a preset control for target media content on a preset page; and
a first prompt module configured to display first prompt information in response to a preset trigger operation acting on the preset control, the preset trigger operation being different from a like operation acting on the preset control, the first prompt information being used to prompt that a number of recommendations of media content of a target type is to be increased, and the target type being a media content type of the target media content.

According to a third aspect, an embodiment of the present disclosure further provides an electronic device. The electronic device includes:
one or more processors; and
a memory configured to store one or more programs, where
when the one or more programs is executed by the one or more processors, the one or more processors are caused to implement the interaction method described in the embodiments of the present disclosure.

According to a fourth aspect, an embodiment of the present disclosure further provides a computer-readable storage medium having a computer program stored thereon. The program, when executed by a processor, implements the interaction method described in the embodiments of the present disclosure.

### BRIEF DESCRIPTION OF THE DRAWINGS

The foregoing and other features, advantages, and aspects of embodiments of the present disclosure become more apparent with reference to the following specific implementations and in conjunction with the accompanying drawings. Throughout the drawings, the same or similar reference numerals denote the same or similar elements. It should be understood that the accompanying drawings are schematic and that parts and elements are not necessarily drawn to scale.
FIG. 1 is a schematic flowchart of an interaction method according to an embodiment of the present disclosure;
FIG. 2 is a schematic diagram of display of a preset control according to an embodiment of the present disclosure;
FIG. 3 is a schematic diagram of display of first prompt information according to an embodiment of the present disclosure;
FIG. 4 is a schematic diagram of display of another preset control according to an embodiment of the present disclosure;
FIG. 5 is a schematic diagram of display of second prompt information according to an embodiment of the present disclosure;
FIG. 6 is a schematic diagram of display of another second prompt information according to an embodiment of the present disclosure;
FIG. 7 is a schematic flowchart of another interaction method according to an embodiment of the present disclosure;
FIG. 8 is a schematic diagram of display of a preset dynamic effect according to an embodiment of the present disclosure;
FIG. 9 is a block diagram of a structure of an interaction apparatus according to an embodiment of the present disclosure; and
FIG. 10 is a schematic diagram of a structure of an electronic device according to an embodiment of the present disclosure.

### DETAILED DESCRIPTION OF EMBODIMENTS

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of' mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an optional but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above process of notifying and obtaining the authorization of the user is only illustrative and does not constitute a limitation on the implementations of the present disclosure, and other manners that comply with the relevant laws and regulations may also be applied in the implementations of the present disclosure.

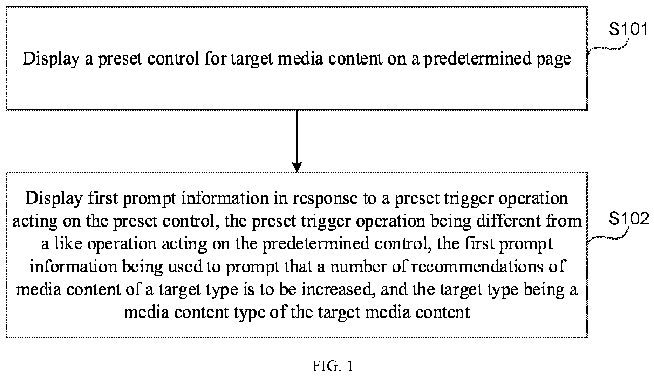

FIG. 1 is a schematic flowchart of an interaction method according to an embodiment of the present disclosure. The method may be performed by an interaction apparatus. The apparatus may be implemented by software and/or hardware, and may be configured in an electronic device, typically in a mobile phone or a tablet computer. The interaction method provided in this embodiment of the present disclosure is applicable to a scenario in which a user actively adjusts a number of recommendations of media content of a corresponding type by performing a preset trigger operation. As shown in FIG. 1, the interaction method provided in this embodiment may include the following steps.

S101: Display a preset control for target media content on a preset page.

The preset page may be a page on which a preset control corresponding to the media content is displayed, such as a media content display page or a media content information display page. The media content display page may be understood as a page for displaying the media content. For example, the media content display page may include: a media content display page for displaying recommended media content, such as a recommendation page; a media content display page for displaying media content posted by a user associated with a current user, such as a display page for media content posted by a user followed by the current user; and a media content display page for displaying media content associated with a location at which the current user is located or that is set by the current user, such as a same-city page. The media content information display page may be a page for displaying media content information, such as a media content list page. The media content information may include, for example, information such as a title and cover of media content. An example in which the preset page is the media content display page is used below for description.

The preset control may be understood as a control on which a preset trigger operation acts. The control may be a control for allowing the user to like corresponding media content, that is, a like control. An example in which the preset control is the like control is used below for description. The target media content may be understood as media content corresponding to the preset control, such as media content displayed on the preset page or media content corresponding to specific media content information displayed on the preset page.

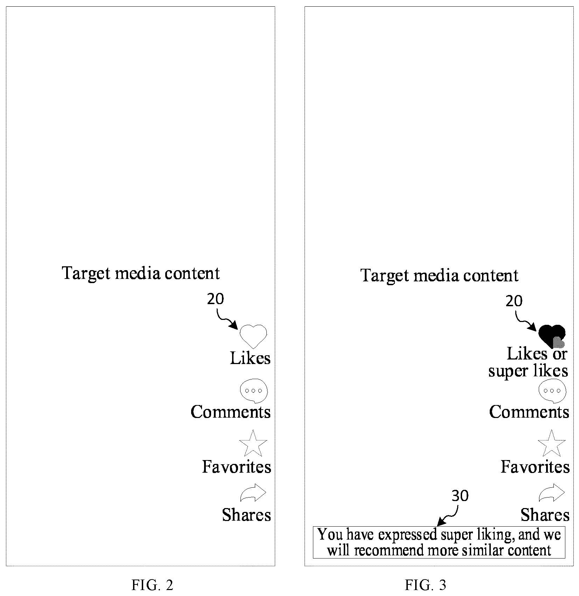

In this embodiment, a preset control 20 for the target media content may be displayed on the preset page. For example, when the target media content is displayed on the preset page or media content information of the target media content is displayed on the preset page, the preset control 20 for the target media content may be further displayed on the preset page, as shown in FIG. 2 (where for example the target media content is displayed on the media content display page), so that the current user may perform a preset trigger operation, a like operation, or a cancel operation for the target media content.

S102: Display first prompt information in response to a preset trigger operation acting on the preset control, the preset trigger operation being different from a like operation acting on the preset control, the first prompt information being used to prompt that a number of recommendations of media content of a target type is to be increased, and the target type being a media content type of the target media content.

The preset trigger operation may be a trigger operation acting on the preset control, the trigger operation may be used to indicate to increase a number of recommendations of media content of a corresponding type, and the trigger operation is a trigger operation different from a like operation for the target media content.

For example, the preset trigger operation and a like operation may be performed differently. For example, when the like operation is a tap operation acting on the preset control, that is, when a user can like the target media content by taping the preset control, the preset trigger operation may be a touch-and-hold operation or double-tap operation acting on the preset control, or a swipe operation starting/ending at the preset control. Optionally, the preset trigger operation includes a touch-and-hold operation, and the like operation includes a tap operation. The touch-and-hold operation may be a trigger operation having a touch duration exceeding a preset duration. For example, the preset duration may be set to a duration of 0.5s, 1s, etc.

For another example, the preset trigger operation and the like operation may have different functions. For example, the like operation may be used by the user to express their liking for the target media content, and the preset trigger operation may be used by the user to express stronger liking than a like, for example, expressing super liking for the target media content; and/or the like operation may be used to indicate to like the target media content, for example, indicating to add the target media content to a liked media content collection of the user. The preset trigger operation may be used to indicate to recommend a larger number of pieces of media content of a corresponding type to the user, and may be used to further indicate to like and/or express super liking for the target media content, for example, indicating to add the target media content to the liked media content collection and a super liked media content collection of the user.

The first prompt information may be information prompting that the number of recommendations of the media content of the target type is to be increased. The target type is a media content type of the target media content. Different media content types may be divided based on themes of media content, etc.

Specifically, when a preset trigger operation of the preset control 20 acting on the target media content is received, for example, when it is detected that the user touches and holds a like control (i.e., the preset control 20) of the target media content, first prompt information 30 may be displayed in response to the preset trigger operation, and the first prompt information 30 may be used to prompt the user that more media content similar to the target media content is to be recommended to the user, for example, recommending more media content of the same type. In addition, the first prompt information 30 may be further used to prompt the user that super liking for the target media content is successfully expressed.

A display style of the first prompt information is not limited. For example, the first prompt information may be displayed in the form of a bottom reminder or a toast message. For example, when the user performs the preset trigger operation for the first n times, the first prompt information may be displayed in the form of the bottom reminder. The bottom reminder may have a non-transparent background, as shown in FIG. 3. When a number of times the user performs the preset trigger operation is greater than n, if it is detected that the user performs the preset trigger operation, the first prompt information may be displayed in the form of the toast message. Compared with the bottom reminder, the toast message may have a smaller display size or a larger background transparency to reduce disturbance to the user. Here, n is a positive integer.

In this embodiment, when the current user performs the preset trigger operation for specific media content, a number of recommendations of media content of a corresponding type may be increased, and the current user may be prompted so that the user can be aware of a function of the preset trigger operation. In this way, it is possible to diversify a way of determining the recommended media content, and to meet the need of the current user to increase, in a targeted manner, the number of recommendations of media content of a specific type, that is, more media content of this type will be recommended to the current user later.

In some implementations, after displaying the preset control for the first media content, the method further includes at least one of the following: switching the preset control from the non-liked state to the liked state in response to a like operation acting on the preset control; or switching the preset control from the preset state or the liked state to the non-liked state in response to a cancel operation acting on the preset control.

In the above implementation, by triggering the preset control, the user may also like the target media content or cancel the like and/or super liking for the target media content, so as to further diversify a function of the preset control and reduce a number of controls required to be set.

The like operation may be an operation for indicating to like the target media content. The cancel operation may be an operation for indicating to cancel the like and super liking for the target media content, that is, an operation for switching the target media content to a state in which neither has a like operation been performed nor has a super like been expressed. The manner in which the like operation and the cancel operation are performed may be the same or different, and the manner in which the cancel operation and the preset trigger operation are performed may be the same or different. For example, the like operation and the cancel operation may be tap operations for the preset control, and the preset trigger operation may be the touch-and-hold operation for the preset control.

When the target media content is not liked, when the target media content is liked but super liking is not expressed for the target media content, and when super liking is expressed for the target media content, the preset control may have different display states so that the user can be aware of the state of the target media content. For example, when the target media content is not liked, the preset control may be displayed in the non-liked state; when the target media content is liked but super liking is not expressed for the target media content, the preset control may be displayed in the liked state; and when super liking is expressed for the target media content, the preset control may be displayed in a preset state, for example, a super liked state.

Specifically, when the like operation acting on the preset control is received, the preset control may be switched from the non-liked state to the liked state, and the target media content may be further added to the liked media content collection of the user; and when the cancel operation acting on the preset control is received, the preset control may be switched from the liked state or the preset state to the non-liked state, and moreover, the target media content may be further removed from the liked media content collection and/or a preset media content collection of the user.

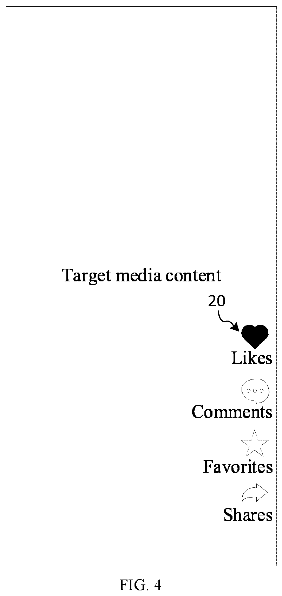

For example, the like operation and the cancel operation are the tap operations for the preset control 20, when a tap operation acting on the preset control 20 is received, a display state of the preset control 20 before the tap operation is responded (for example, when the tap operation is received) may be determined, and if the preset control 20 is in the non-liked state (as shown in FIG. 2), the tap operation is determined as the like operation, and in response to the like operation, the preset control 20 is switched from the non-liked state to the liked state (as shown in FIG. 4); and if the preset control 20 is in the liked state (as shown in FIG. 4) or the preset state (as shown in FIG. 3), the tap operation is determined as the cancel operation, and in response to the cancel operation, the preset control 20 is switched from the liked state or the preset state to the non-liked state (as shown in FIG. 2).

It may be understood that the like operation may or may not be used to adjust media content recommended to the user. When the like operation is used to adjust the media content recommended to the user, a corresponding adjustment way therefor is different from a corresponding adjustment way for the preset trigger operation. That is, the adjustment way (for example, a positive adjustment way) for recommending media content to the user may be associated with a triggering way of the preset control. For example, the preset trigger operation is used to increase the number of recommendations of the media content of the target type, and the like operation is used to increase a recommendation weight of media content posted by a same creator (i.e., a poster of the target media content); or the preset trigger operation is used to increase the number of recommendations of the media content of the target type by a first value, the like operation is used to increase the number of recommendations of the media content of the target type by a second value, and so on. The second value is less than the first value.

In some implementations, after displaying the preset control for the target media content on the preset page, the method further includes: displaying second prompt information on the preset page in response to a preset display condition being met, the second prompt information being used to prompt the user to perform the preset trigger operation, and a display style of the second prompt information being associated with a display number of times of the second prompt information.

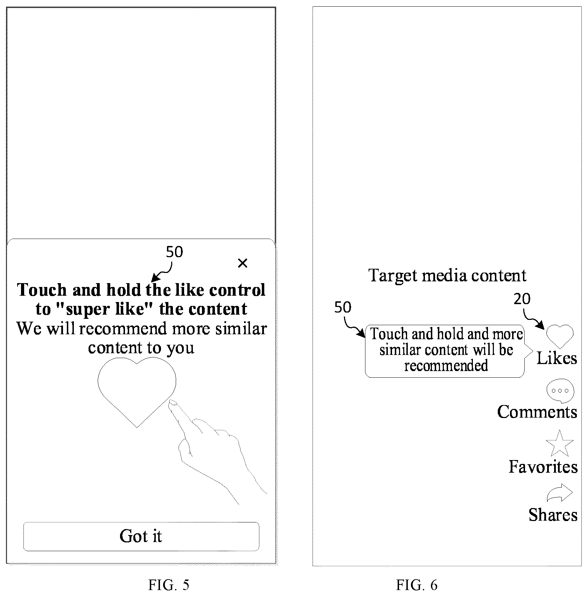

In the above implementation, when the preset display condition is met, second prompt information 50 may be displayed on the preset page, as shown in FIG. 5 and FIG. 6. The second prompt information 50 may be used to prompt the user that a current application supports the preset trigger operation, and/or prompt the user of the function of the preset trigger operation, so as to guide the user to perform the preset trigger operation.

The preset display condition may be set flexibly. For example, if a display number of times of the second prompt information is less than a preset display number of times after the user installs or starts the current application this time, the second prompt information may be displayed after the user performs the like operation, when a display duration of specific media content reaches x% of its total display duration, or when the preset media content is displayed. Here, x ≥ 0, and its specific value may be set as needed.

A display style of the second prompt information is not limited. For example, the display style of the second prompt information is associated with its display number of times. For example, after the user installs or starts the current application this time, the second prompt information may be displayed in the form of a panel when the second prompt information is displayed for the first m times, as shown in FIG. 5; and when the display number of times of the second prompt information is more than m after the user installs or starts the current application this time, the second prompt information is displayed in the form of a bubble, as shown in FIG. 6. When the second prompt information is displayed in the form of the panel, the user may instruct the current application to stop displaying the panel by performing a panel closing operation; and when the second prompt information is displayed in the form of the bubble, the user may instruct the current application to stop displaying the bubble by triggering the bubble or by a way other than triggering the bubble (for example, performing the like operation or the super like operation, etc.). In addition, the current application may stop displaying the bubble when a display duration of the bubble reaches a preset duration. Here, m is a positive integer, and its value may be set as needed.

According to the interaction method provided in this embodiment, the preset control for the target media content is displayed on the preset page; and in response to the preset trigger operation acting on the preset control, the first prompt information is displayed, where the preset trigger operation is different from the like operation acting on the preset control, the first prompt information is used to prompt that the number of recommendations of the media content of the target type is to be increased, and the target type is the media content type of the target media content. In this embodiment, with the above technical solution, the user can increase the number of recommendations of media content of the corresponding type by performing the preset trigger operation for the preset control, thereby diversifying the way of determining the recommended media content and meeting the need of a user to increase, in a targeted manner, the number of pieces of media content of a specific type recommended to the user.

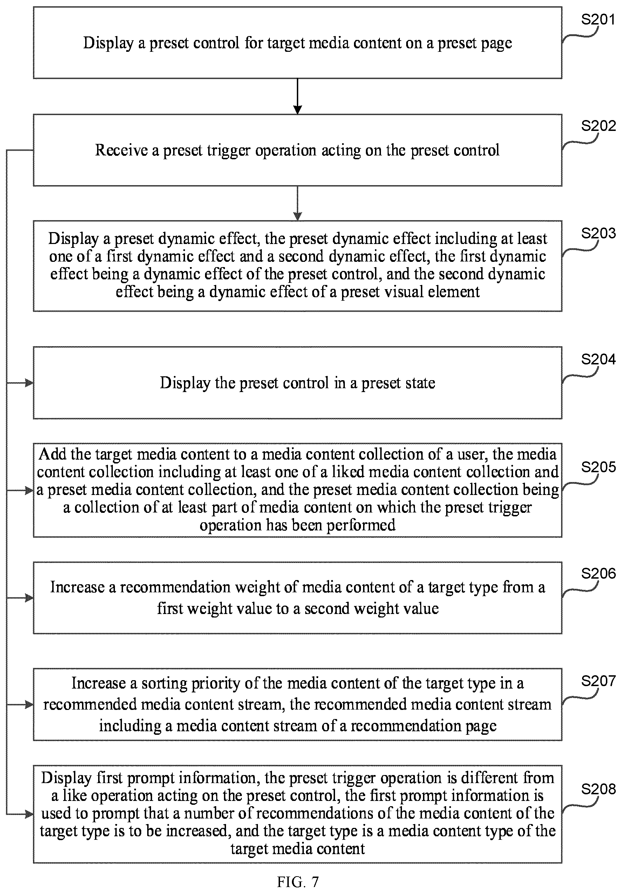

FIG. 7 is a schematic flowchart of another interaction method according to an embodiment of the present disclosure. The solution in this embodiment may be combined with one or more optional solutions in the above embodiment. Optionally, the interaction method provided in this embodiment may further include at least one of the following: displaying a preset dynamic effect, the preset dynamic effect including at least one of a first dynamic effect and a second dynamic effect, the first dynamic effect being a dynamic effect of the preset control, and the second dynamic effect being a dynamic effect of a preset visual element; displaying the preset control in a preset state; adding the target media content to a media content collection of a user, the media content collection including at least one of a liked media content collection and a preset media content collection, and the preset media content collection being a collection of at least part of media content on which the preset trigger operation has been performed; increasing a recommendation weight of the media content of the target type from a first weight value to a second weight value; or increasing a sorting priority of the media content of the target type in a recommended media content stream, the recommended media content stream including a media content stream of the preset page.

Accordingly, as shown in FIG. 7, the interaction method provided in this embodiment may include the following steps.

S201: Display the preset control for the target media content on the preset page.

S202: Receive the preset trigger operation acting on the preset control, and perform at least one of S203 to S208.

S203: Display the preset dynamic effect, the preset dynamic effect including at least one of the first dynamic effect and the second dynamic effect, the first dynamic effect being a dynamic effect of the preset control, and the second dynamic effect being a dynamic effect of the preset visual element.

In this embodiment, when the preset trigger operation for the preset control is received, the preset dynamic effect may be displayed to further enhance a visual effect of performing the preset trigger operation and diversify a way to respond to the preset trigger operation.

The preset dynamic effect may include at least one of the first dynamic effect and the second dynamic effect. The first dynamic effect may be the dynamic effect of the preset control, such as a dynamic effect of switching a display state of the preset control from the non-liked state or the liked state to the preset state or another dynamic effect. The second dynamic effect may be the dynamic effect of the preset visual element, which may be displayed in response to the preset trigger operation, and the second dynamic effect may be a dynamic effect associated with the preset trigger operation or the preset control. For example, the preset visual element may have a heart shape, and the second dynamic effect may be a dynamic effect in which the preset visual element rotates and explodes into a plurality of small heart shapes after rotating for a period of time.

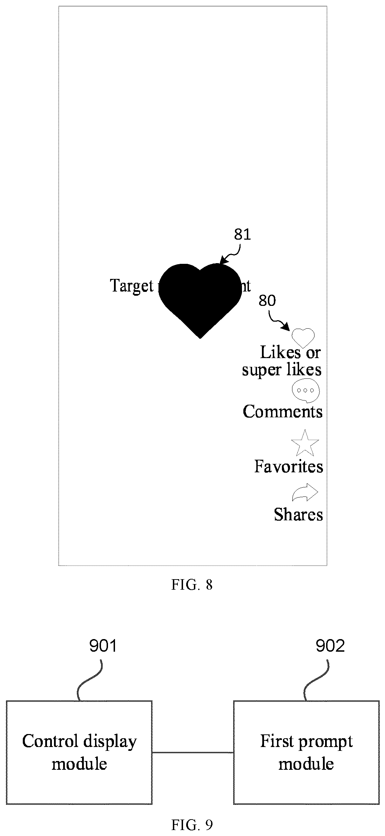

Specifically, when the preset trigger operation acting on the preset control is received, a first dynamic effect 80 and/or a second dynamic effect 81 of the preset control may be displayed in response to the preset trigger operation. For example, the first dynamic effect 80 may be displayed at an original display position of the preset control, and the second dynamic effect 81 may be displayed at a preset position (for example, a central region) of the preset page, as shown in FIG. 8.

S204: Display the preset control in the preset state.

In this embodiment, when the preset trigger operation for the preset control is received, the preset control may be displayed in the preset state, and the preset state is used to indicate that the user has performed the preset trigger operation on the target media content.

For example, when the preset control 20 is in the non-liked state (as shown in FIG. 2), the preset control 20 may be switched from the non-liked state to the preset state (as shown in FIG. 3) in response to the preset trigger operation; when the preset control 20 is in the liked state (as shown in FIG. 4), the preset control 20 may be switched from the liked state to the preset state (as shown in FIG. 3) in response to the preset trigger operation.

In addition, when the preset trigger operation is received, the preset control is already in the preset state, for example, the user has already performed the preset trigger operation for the target media content before performing a preset trigger operation this time, the preset trigger operation performed by the user this time may not be responded, or the user may be prompted that the user has already performed the preset trigger operation for the target media content.

S205: Add the target media content to the media content collection of the user, where the media content collection includes at least one of the liked media content collection and the preset media content collection, and the preset media content collection is a collection of at least part of media content on which the preset trigger operation has been performed.

The media content collection may include at least one of the liked media content collection and the preset media content collection, and the collection may be displayed in the form of a list or a page. The liked media content collection may be understood as a collection of at least part of media content on which the user has performed the like operation, such as a liked media content list or a like page. The preset media content collection may be understood as a collection of at least part of media content on which the user has performed the preset trigger operation. For example, the preset media content collection may be a collection of media content for which the user has expressed super liking, such as a super like list of the user or a super like page of the user.

In this embodiment, the liked media content collection may be used to carry media content liked by the user, and the preset media content collection may be used to carry media content on which the user has performed the preset trigger operation (for example, media content that is super liked by the user), so that the user views the media content that is liked by the user or on which the user has performed the preset trigger operation.

When the preset trigger operation for the target media content is received, in response to the preset trigger operation, the target media content may be added to the liked media content collection and/or the preset media content collection of the user.

For example, in response to the preset trigger operation, the target media content may be added only to the preset media content collection of the user, but not added to the liked media content collection of the user, that is, the target media content is not liked.

Considering that the preset trigger operation is used to express stronger liking than a like, for example, expressing super liking, when the preset trigger operation is received, the target media content may be further liked in response to the preset trigger operation. For example, if the target media content is not added to the liked media content collection of the user, in response to the preset trigger operation, the target media content may be added to the liked media content collection and the preset media content collection of the user. If the target media content is already in the liked media content collection of the user, in response to the preset trigger operation, the target media content is added to the preset media content collection of the user.

S206: Increase the recommendation weight of the media content of the target type from the first weight value to the second weight value.

A recommendation weight of a specific type of media content may be positively correlated with a number of recommendations of media content of the corresponding type. For example, the recommendation weight may be used to determine a proportion of media content of the corresponding type in recommended media content or a number of pieces of media content of the corresponding type each time a media content recommendation is made. For example, 50 pieces of media content are recommended to the user. The recommendation weight may be used to determine a proportion of media content of the corresponding type in the 50 pieces of media content, or to determine a number of pieces of media content of the corresponding type contained in the 50 pieces of media content. The first weight value is a weight value of the media content of the target type before the preset trigger operation is received this time; and the second weight value is a weight value of the media content of the target type after the recommendation weight is increased. The first weight value is less than or equal to the second weight value, for example, when the first weight value has not yet reached a maximum weight value to which the recommendation weight can be increased, the first weight value may be less than the second weight value; and when the first weight value has reached the maximum weight value to which the recommendation weight can be increased, the first weight value may be equal to the second weight value.

In this embodiment, the recommendation weight of the media content of the target type may be increased in response to the preset trigger operation, for example, increasing the recommendation weight of the media content of the target type from the first weight value to the second weight value, so as to perform subsequent media content recommendation based on an increased recommendation weight of the media content of the target type.

In this embodiment, when the media content stream of the preset page is a recommended media content stream, or when the target media content is recommended media, the media content stream of the preset page may be updated or not updated in response to the preset trigger operation. The recommended media content stream may be a media content stream containing recommended media content, for example, a media content stream with all or part of media content being recommended media content.

In some implementations, the preset page includes a recommendation page, and after increasing the recommendation weight of the media content of the target type from the first weight value to the second weight value, the method further includes: keeping media content in the recommended media content stream unchanged until a media content stream update operation acting on the preset page is received; or updating at least part of media content in the recommended media content stream based on the second weight value.

The recommendation page may be considered as a page for displaying recommended media content.

For example, in the case where the preset page is the recommendation page, after the recommendation weight of the media content of the target type is increased from the first weight value to the second weight value, the media content stream of the preset page may not be updated until the media content stream update operation acting on the preset page is received, so as to prevent the user from being disturbed when viewing media content that is contained in the media content stream before the preset trigger operation is performed. The media content stream of the preset page may alternatively be updated based on the increased second weight value. For example, the at least part of the media content in the media content stream of the preset page is updated based on the second weight value after the increase, for example, updating at least part of media content that is located after the target media content in the media content stream of the preset page, so as to increase a number of pieces of media content of the target type contained in the media content stream, thereby meeting the need of the user to view more media content of the target type.

In the above implementation, whether to update the media content stream of the preset page in response to the preset trigger operation may be preset, or may be determined based on whether the user liked the target media content before the preset trigger operation is received. For example, when the target media content is media content liked by the user, the media content stream of the preset page may not be updated in response to the preset trigger operation. When the target media content is media content that has not been liked by the user, the media content stream of the preset page is updated in response to the preset trigger operation. At this time, optionally, after increasing the recommendation weight of the media content of the target type from the first weight value to the second weight value, the method further includes at least one of the following: in response to the preset control being in a liked state before the preset trigger operation is received, keeping the media content in the recommended media content stream unchanged until the media content stream update operation acting on the preset page is received; or updating at least part of the media content in the recommended media content stream based on the second weight value in response to the preset control being in a non-liked state before the preset trigger operation is received.

In some implementations, after increasing the recommendation weight of the media content of the target type from the first weight value to the second weight value, the method further includes: updating the media content in the recommended media content stream based on the second weight value in response to the media content stream update operation acting on the preset page.

In the above implementation, regardless of whether the media content stream of the preset page is updated in response to the preset trigger operation, after the preset trigger operation is performed, the user may instruct the current application to update the media content stream of the preset page by performing the media content stream update operation, so as to meet the needs of the user to view new media content and to view more media content of the target type.

The media content stream update operation may be a trigger operation for indicating to update the media content stream of the preset page, for example, a trigger operation for indicating to update part or all of the media content in the media content stream of the preset page. The manner in which the media content stream update operation is performed is not limited. For example, the media content stream update operation may include an operation of swiping up to the last media content in the media content stream and then continuing to swipe up, an operation of swiping down to the first media content in the media content stream and then continuing to swipe down, or an operation of triggering a set control on the preset page. The set control may be an operation for indicating to update the media content stream of the preset page.

Specifically, when the media content stream update operation acting on the preset page is received, in response to the media content stream update operation, the at least part of the media content in the media content stream of the preset page may be updated based on the second weight value, for example, adding some new recommended content to the media content stream of the preset page based on the second weight value or switching the at least part of the media content in the media content stream of the preset page based on the second weight value.

S207: Increase the sorting priority of the media content of the target type in the recommended media content stream, where the recommended media content stream includes a media content stream of the recommendation page.

In this embodiment, the sorting priority of the media content of the target type in the recommended media content stream may be increased in response to the preset trigger operation.

A sorting priority of media content of a specific type may be understood as a priority of sorting media content of the corresponding type. The sorting priority may be related to an arrangement position of media content of the corresponding type or a number of pieces of media content of the corresponding type arranged in a front portion. For example, after the sorting priority is increased, the media content of the target type may be arranged at a front position in the recommended media content stream, or a set portion (such as the first 1/2 or 1/4) of the recommended media content stream may contain a larger number of pieces of media content of the target type. For example, a sorting priority of media content of a first type is higher than a sorting priority of media content of a second type. In the recommended media content stream, the media content of the first type may be arranged before the media content of the second type; or in the set portion (such as the first 1/2 or 1/4.) of the recommended media content stream, a number of pieces of media content of the first type may be greater than a number of pieces of media content of the second type.

S208: Display first prompt information, the preset trigger operation being different from a like operation acting on the preset control, the first prompt information being used to prompt that a number of recommendations of the media content of the target type is to be increased, and the target type being a media content type of the target media content.

It should be noted that when at least two steps in S203 to S208 are performed in response to the preset trigger operation, an order in which the steps are performed may be set as needed, for example, a first effect and a second effect may be displayed in response to the preset trigger operation. During the process of displaying the first effect and/or the second effect, the target media content is added to the liked media content collection and/or the preset media content collection of the user, and a recommendation weight and/or a sorting priority of the target media content is increased. When the display of the first effect is completed, the preset control is displayed in the preset state, and/or when the display of the second effect is completed, the first prompt information is displayed on the preset page.

The interaction method provided in this embodiment can further diversify the way to respond to the preset trigger operation and meet the need of the user to increase the number of recommendations of media content of a specific type.

FIG. 9 is a block diagram of a structure of an interaction apparatus according to an embodiment of the present disclosure. The apparatus may be implemented in software and/or hardware, and may be configured in an electronic device, typically in a mobile phone or a tablet computer, and may adjust a number of recommendations of media content of a corresponding type by performing the interaction method. As shown in FIG. 9, the interaction apparatus provided in this embodiment may include a control display module 901 and a first prompt module 902, where the control display module 901 is configured to display a preset control for target media content on a preset page; and the first prompt module 902 is configured to display first prompt information in response to a preset trigger operation acting on the preset control, where the preset trigger operation is different from a like operation acting on the preset control, the first prompt information is used to prompt that a number of recommendations of media content of a target type is to be increased, and the target type is a media content type of the target media content.

According to the interaction apparatus provided in this embodiment, the control display module is used to display the preset control for the target media content on the preset page; and the first prompt module is used to display the first prompt information in response to the preset trigger operation acting on the preset control, where the preset trigger operation is different from the like operation acting on the preset control, the first prompt information is used to prompt that the number of recommendations of media content of the target type is to be increased, and the target type is the media content type of the target media content. In this embodiment, with the above technical solution, the user may increase the number of recommendations of media content of the corresponding type by performing the preset trigger operation for the preset control, thereby diversifying the way of determining the recommended media content and meeting the need of a user to increase, in a targeted manner, the number of pieces of media content of a specific type recommended to the user.

In the above solution, the first prompt module 902 may be further configured to perform at least one of the following: displaying a preset dynamic effect, where the preset dynamic effect includes at least one of a first dynamic effect and a second dynamic effect, the first dynamic effect is a dynamic effect of the preset control, and the second dynamic effect is a dynamic effect of a preset visual element; displaying the preset control in a preset state; adding the target media content to a media content collection of a user, where the media content collection includes at least one of a liked media content collection and a preset media content collection, and the preset media content collection is a collection of at least part of media content on which the preset trigger operation has been performed; increasing a recommendation weight of the media content of the target type from a first weight value to a second weight value; or increasing a sorting priority of the media content of the target type in a recommended media content stream, where the recommended media content stream includes a media content stream of a recommendation page.

In the above solution, the first prompt module 902 may be further configured to: the preset page includes a recommendation page, and after the recommendation weight of the media content of the target type is increased from the first weight value to the second weight value, keep media content in the recommended media content stream unchanged until a media content stream update operation acting on the preset page is received; or update at least part of media content in the recommended media content stream based on the second weight value.

In the above solution, the first prompt module 902 may be further configured to: after the recommendation weight of the media content of the target type is increased from the first weight value to the second weight value, in response to the preset control being in a liked state before the preset trigger operation is received, keep the media content in the recommended media content stream unchanged until the media content stream update operation acting on the preset page is received; and/or update at least part of the media content in the recommended media content stream based on the second weight value in response to the preset control is in a non-liked state before the preset trigger operation is received.

Further, the interaction apparatus provided in this embodiment may further include: a media content update module configured to, after the recommendation weight of the media content of the target type is increased from the first weight value to the second weight value, update the media content in the recommended media content stream based on the second weight value in response to the media content stream update operation acting on the preset page.

Further, the interaction apparatus provided in this embodiment may further include at least one of the following: a like module configured to switch, after the preset control for the first media content is displayed, the preset control from the non-liked state to the liked state in response to a like operation acting on the preset control; or a cancel module configured to switch, after the preset control for the first media content is displayed, the preset control from the preset state or the liked state to the non-liked state in response to a cancel operation acting on the preset control.

Further, the interaction apparatus provided in this embodiment may further include: a second prompt module configured to display, after the preset control for the target media content is displayed on the preset page, second prompt information on the preset page if a preset display condition is met, where the second prompt information is used to prompt the user to perform the preset trigger operation, and a display style of the second prompt information is associated with a display number of times of the second prompt information.

In the above solution, the preset trigger operation may include a touch-and-hold operation, and the like operation may include a tap operation.

The interaction apparatus provided in this embodiment of the present disclosure can perform the interaction method provided in any one of the embodiments of the present disclosure, and has corresponding functional modules and beneficial effects for performing the interaction method. For technical details not described in detail in this embodiment, reference may be made to the interaction method provided in any embodiment of the present disclosure.

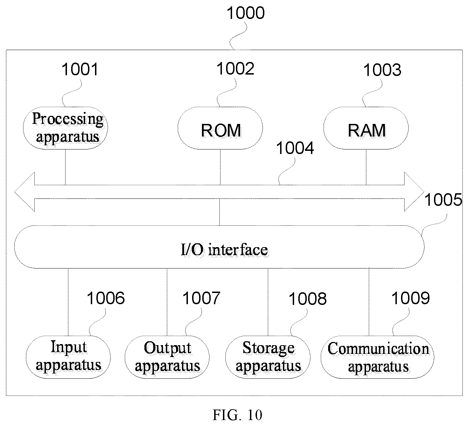

FIG. 10 is a schematic diagram of a structure of an electronic device (for example, a terminal device) 1000 suitable for implementing the embodiments of the present disclosure. A terminal device in this embodiment of the present disclosure may include, but is not limited to, mobile terminals such as a mobile phone, a notebook computer, a digital broadcast receiver, a personal digital assistant (PDA), a tablet computer (PAD), a portable media player (PMP), and a vehicle-mounted terminal (e.g., a vehicle navigation terminal), and fixed terminals such as a digital TV and a desktop computer. The electronic device shown in FIG. 10 is merely an example, and shall not impose any limitation on the function and scope of use of the embodiments of the present disclosure.

As shown in FIG. 10, the electronic device 1000 may include a processing apparatus (e.g., a central processing unit or a graphics processing unit) 1001 that may perform a variety of appropriate actions and processing in accordance with a program stored in a read-only memory (ROM) 1002 or a program loaded from a storage apparatus 1008 into a random access memory (RAM) 1003. The RAM 1003 further stores various programs and data required for the operation of the electronic device 1000. The processing apparatus 1001, the ROM 1002, and the RAM 1003 are connected to one another through a bus 1004. An input/output (I/O) interface 1005 is also connected to the bus 1004.

Generally, the following apparatuses may be connected to the I/O interface 1005: an input apparatus 1006 including, for example, a touchscreen, a touchpad, a keyboard, a mouse, a camera, a microphone, an accelerometer, and a gyroscope; an output apparatus 1007 including, for example, a liquid crystal display (LCD), a speaker, and a vibrator; the storage apparatus 1008 including, for example, a tape and a hard disk; and a communication apparatus 1009. The communication apparatus 1009 may allow the electronic device 1000 to perform wireless or wired communication with other devices to exchange data. Although FIG. 10 shows the electronic device 1000 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 1009, installed from the storage apparatus 1008, or installed from the ROM 1002. When the computer program is executed by the processing apparatus 1001, the above-mentioned functions defined in the method of the embodiment of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the hypertext transfer protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to: display a preset control for target media content on a preset page; and display first prompt information in response to a preset trigger operation acting on the preset control, where the preset trigger operation is different from a like operation acting on the preset control, the first prompt information is used to prompt that a number of recommendations of media content of a target type is to be increased, and the target type is a media content type of the target media content.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of a module does not constitute a limitation on the unit itself in some cases.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, Example 1 provides an interaction method. The method includes:
displaying a preset control for target media content on a preset page; and
displaying first prompt information in response to a preset trigger operation acting on the preset control, the preset trigger operation being different from a like operation acting on the preset control, the first prompt information being used to prompt that a number of recommendations of media content of a target type is to be increased, and the target type being a media content type of the target media content.

According to one or more embodiments of the present disclosure, Example 2 is based on the method of Example 1, where the method further includes at least one of the following:
displaying a preset dynamic effect, the preset dynamic effect including at least one of a first dynamic effect and a second dynamic effect, the first dynamic effect being a dynamic effect of the preset control, and the second dynamic effect being a dynamic effect of a preset visual element;
displaying the preset control in a preset state;
adding the target media content to a media content collection of a user, the media content collection including at least one of a liked media content collection and a preset media content collection, and the preset media content collection being a collection of at least part of media content on which the preset trigger operation has been performed;
increasing a recommendation weight of the media content of the target type from a first weight value to a second weight value; or
increasing a sorting priority of the media content of the target type in a recommended media content stream, the recommended media content stream including a media content stream of a recommendation page.

According to one or more embodiments of the present disclosure, Example 3 is based on the method of Example 2, where the preset page includes a recommendation page, and after the increasing a recommendation weight of the media content of the target type from a first weight value to a second weight value, the method further includes:
keeping media content in the recommended media content stream unchanged until a media content stream update operation acting on the preset page is received; or
updating at least part of media content in the recommended media content stream based on the second weight value.

According to one or more embodiments of the present disclosure, Example 4 is based on the method of Example 3, where after the increasing a recommendation weight of the media content of the target type from a first weight value to a second weight value, the method further includes at least one of the following:
in response to the preset control being in a liked state before the preset trigger operation is received, keeping the media content in the recommended media content stream unchanged until the media content stream update operation acting on the preset page is received; or
updating the at least part of the media content in the recommended media content stream based on the second weight value in response to the preset control being in a non-liked state before the preset trigger operation is received.

According to one or more embodiments of the present disclosure, Example 5 is based on the method of Example 3, where after the increasing a recommendation weight of the media content of the target type from a first weight value to a second weight value, the method further includes:
updating the media content in the recommended media content stream based on the second weight value in response to the media content stream update operation acting on the preset page.

According to one or more embodiments of the present disclosure, Example 6 is based on the method according to any of Examples 1 to 5, where after the displaying a preset control for first media content, the method further includes at least one of the following:
switching the preset control from the non-liked state to the liked state in response to a like operation acting on the preset control; or
switching the preset control from the preset state or the liked state to the non-liked state in response to a cancel operation acting on the preset control.

According to one or more embodiments of the present disclosure, Example 7 is based on the method according to any of Examples 1 to 5, where after the displaying a preset control for target media content on a preset page, the method further includes:
displaying second prompt information on the preset page in response to a preset display condition being met, where the second prompt information is used to prompt the user to perform the preset trigger operation, and a display style of the second prompt information is associated with a display number of times of the second prompt information.

According to one or more embodiments of the present disclosure, Example 8 is based on the method of any of the Example 1 to Example 5, where the preset trigger operation includes a touch-and-hold operation, and the like operation includes a tap operation.

According to one or more embodiments of the present disclosure, Example 9 provides an interaction apparatus. The apparatus includes:
a control display module configured to display a preset control for target media content on a preset page; and
a first prompt module configured to display first prompt information in response to a preset trigger operation acting on the preset control, where the preset trigger operation is different from a like operation acting on the preset control, the first prompt information is used to prompt that a number of recommendations of media content of a target type is to be increased, and the target type is a media content type of the target media content.

According to one or more embodiments of the present disclosure, Example 10 provides an electronic device. The electronic device includes:
one or more processors; and
a memory configured to store one or more programs, where
when the one or more programs is executed by the one or more processors, the one or more processors are caused to implement the interaction method according to any of Examples 1 to 8.

According to one or more embodiments of the present disclosure, Example 11 provides a computer-readable storage medium having a computer program stored thereon. The program, when executed by a processor, implements the interaction method according to any of Examples 1 to 8.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable subcombination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. An interaction method, comprising:
displaying a preset control for target media content on a preset page; and
displaying first prompt information in response to a preset trigger operation acting on the preset control, the preset trigger operation being different from a like operation acting on the preset control, the first prompt information being used to prompt that a number of recommendations of media content of a target type is to be increased, and the target type being a media content type of the target media content.

2. The method according to claim 1, further comprising at least one of the following:
displaying a preset dynamic effect, the preset dynamic effect comprising at least one of a first dynamic effect or a second dynamic effect, the first dynamic effect being a dynamic effect of the preset control, and the second dynamic effect being a dynamic effect of a preset visual element;
displaying the preset control in a preset state;
adding the target media content to a media content collection of a user, the media content collection comprising at least one of a liked media content collection or a preset media content collection, and the preset media content collection being a collection of at least part of media content on which the preset trigger operation has been performed;
increasing a recommendation weight of the media content of the target type from a first weight value to a second weight value; or
increasing a sorting priority of the media content of the target type in a recommended media content stream, the recommended media content stream comprising a media content stream of a recommendation page.

3. The method according to claim 2, wherein the preset page comprises a recommendation page, and after increasing the recommendation weight of the media content of the target type from the first weight value to the second weight value, the method further comprises:
keeping media content in the recommended media content stream unchanged until a media content stream update operation acting on the preset page is received; or
updating at least part of media content in the recommended media content stream based on the second weight value.

4. The method according to claim 3, wherein after increasing the recommendation weight of the media content of the target type from the first weight value to the second weight value, the method further comprises at least one of the following:
in response to the preset control being in a liked state before the preset trigger operation is received, keeping the media content in the recommended media content stream unchanged until the media content stream update operation acting on the preset page is received; or
in response to the preset control being in a non-liked state before the preset trigger operation is received, updating at least part of the media content in the recommended media content stream based on the second weight value.

5. The method according to claim 3, wherein after increasing the recommendation weight of the media content of the target type from the first weight value to the second weight value, the method further comprises:
updating the media content in the recommended media content stream based on the second weight value in response to the media content stream update operation acting on the preset page.

6. The method according to any of claims 1 to 5, wherein after displaying the preset control for the first media content, the method further comprises at least one of the following:
switching the preset control from a non-liked state to a liked state in response to the like operation acting on the preset control; or
switching the preset control from a preset state or the liked state to the non-liked state in response to a cancel operation acting on the preset control.

7. The method according to any of claims 1 to 5, wherein after displaying the preset control for the target media content on the preset page, the method further comprises:
displaying second prompt information on the preset page in repose to a preset display condition being met, the second prompt information being used to prompt the user to perform the preset trigger operation, and a display style of the second prompt information being associated with a display number of times of the second prompt information.

8. The method according to any of claims 1 to 5, wherein the preset trigger operation comprises a touch-and-hold operation, and the like operation comprises a tap operation.

9. An interaction apparatus, comprising:
a control display module configured to display a preset control for target media content on a preset page; and
a first prompt module configured to display first prompt information in response to a preset trigger operation acting on the preset control, the preset trigger operation being different from a like operation acting on the preset control, the first prompt information being used to prompt that a number of recommendations of media content of a target type is to be increased, and the target type being a media content type of the target media content.

10. An electronic device, comprising:
at least one processor; and
a memory communicatively connected to the at least one processor, wherein
the memory stores a computer program executable by the at least one processor, and when the computer program is executed by the at least one processor, the at least one processor are caused to perform the interaction method according to any of claims 1 to 8.

11. A computer-readable storage medium, storing computer instructions that, when executed by a processor, implement the interaction method according to any of claims 1 to 8.
